# EUROPÄISCHE PATENTANMELDUNG

(11) **EP 4 273 415 A1**
(43) Veröffentlichungstag der Anmeldung: **08.11.2023**
(21) Anmeldenummer: 23156562.3
(22) Anmeldetag: 14.02.2023
(51) Int. Cl.: F16F 1/37, G05G 5/05

(54) **MESOSTRUKTURELLE RÜCKSTELLEINHEIT**

(30) Priorität: 02.05.2022 DE 102022110703
(71) Anmelder: elobau GmbH & Co. KG, 88299 Leutkirch im Allgäu (DE)
(72) Erfinder: REISCH, Michael, 88299 Leutkirch (DE); SÜßMANN, Manfred, 89275 Elchingen (DE)
(74) Vertreter: VKK Patentanwälte PartG mbB

(57) **Zusammenfassung**

Die vorliegende Erfindung betrifft eine Rückstelleinheit (1) für die Rückstellung von Rotations- und/oder Translationsauslenkbewegungen eines Stellelements, aufweisend eine aus einer geordneten Anordnung von mindestens zwei Elementarzellen (3) gebildete, geordnete Mesostruktur (2) von Elementarzellen (3), wobei die wenigstens zwei Elementarzellen (3) jeweils mindestens eine Pore (4) aufweisen, durch die die Elementarzellen (3) mittels Krafteinwirkung reversibel kompressier- und expandierbar sind, wobei eine Rückstellkraft der Rückstelleinheit (1) zumindest teilweise durch Verformung der Mesostruktur (2) erzeugbar ist.

## Beschreibung

Die vorliegende Erfindung betrifft eine mesostrukturelle Rückstelleinheit, insbesondere zur Anwendung in Bedienvorrichtungen für Baumaschinen, landwirtschaftliche Traktoren und sonstige Nutzfahrzeuge.

Derartige Bedienvorrichtungen werden unter anderem zur Steuerung von Nutzfahrzeugen, Maschinen, Arbeitsfunktionen von Nutzfahrzeugen oder Baumaschinen und Anbaugeräten eingesetzt. Bedienvorrichtungen im Sinne der Erfindung sind jegliche Vorrichtungen, die Bedienelemente wie beispielsweise Fahrhebel, Fahrpedale, Tasten und insbesondere Joysticks aufweisen. So sind beispielsweise Armrests erfindungsgemäße Bedienvorrichtungen, die eine Vielzahl von Bedienelementen aufweisen. Für solche Bedienelemente ist es hinlänglich bekannt, dass diese Rückstelleinheiten aufweisen, die aufgrund einer auf das Bedienelement wirkenden Rückstellkraft dieses von einer ausgelenkten Position in seine Ausgangsstellung zurückbewegen.

Diese Rückstelleinheiten sind im Stand der Technik regelmäßig elastische Elemente wie Federn oder Elastomere, oder aber elektrische Elemente wie Aktuatoren, bei denen sich eine Kraftkurve anders wie bei den elastischen Elementen auch nach dem Einbau ohne einen Austausch der verbauten Teile ändern lässt. Dagegen müssten die elastischen Elemente aus den Bedienelementen ausgebaut und durch neue ausgetauscht werden, die die gewünschte Elastizität aufweisen. Alternativ sind auch adaptive elastische Materialien bekannt, also solche, deren Materialeigenschaften wie die Elastizität durch das Anlegen eines Stroms oder Magnetfeldes veränderbar sind. Nachteilig an all diesen bekannten Rückstelleinheiten ist, dass sie entweder wie die elastischen Elemente nicht adaptierbar sind, sodass man sich bei der Herstellung auf eine zukünftig festgelegte und nur durch eine Umkonstruktion änderbare Kraftlinie festlegen muss, oder wie die elektrischen Elemente besonders raum- und materialintensiv sind und eine Vielzahl unterschiedlicher Materialien benötigen. Damit einhergehend ist es bei derartigen Elementen nachteilig, dass eine Wartung einzelner Teile dieser elektrischen Elemente in der Regel kosten- und zeitintensiv ist. Eine Lösung dafür ist im Stand der Technik die modulare Ausgestaltung der Rückstelleinheiten, jedoch lösen auch diese nicht das Problem der ressourcenintensiven Ausgestaltung.

Während die eingangs genannten elastischen Materialien zwar im Gegensatz zu den adaptiven Elementen relativ ressourcensparend sind, mangelt es diesen regelmäßig an der Adaptivität. Dieses Problem wird im Stand der Technik regelmäßig durch ein Ergänzen dieser elastischen Materialien um ein adaptierendes Modul gelöst. So wird beispielsweise regelmäßig einer Feder ein Aktuator vorgeschaltet, welcher die Feder je nach Bedarf vorspannen und so die Rückstellkraft verändern kann. Jedoch hat auch diese Ausgestaltung den Nachteil, dass die ursprünglich ressourcensparende Ausgestaltung der elastischen Rückstelleinheit aufgrund des adaptierenden Moduls ebenfalls ressourcenintensiv ist und insbesondere die Kosten und den Raumbedarf der Rückstelleinheit erhöht.

Die vorliegende Erfindung stellt sich daher die Aufgabe, eine Rückstelleinheit anzugeben, welches besonders ressourcensparend ist und adaptiv erweiterbar ist.

Die Erfindung sieht zur Lösung der Aufgabe unter anderem die Verwendung einer Mesostruktur vor. Im Stand der Technik sind Mesostrukturen an sich allgemein als Strukturen bekannt, die eine Porung aufweisen. Diese Porung kann eine stochastische Porung wie beispielsweise bei Schwämmen oder Schäumen sein, oder aber eine geordnete Porung, beispielsweise eine Wabenstruktur, sein. Eine geordnete Porung führt zu einer aus einzelnen Elementarzellen bestehenden Struktur, deren Verhalten bei Kompression oder Dekompression aufgrund der Eigenschaften der Elementarzellen definiert wird. Ebenso ist eine geordnete Mesostruktur mit verschiedenen, miteinander kombinierten Elementarzellen denkbar, welche sich beispielsweise in Ihrer Form oder Materialeigenschaften unterscheiden. Dadurch wird das Verhalten der Struktur ebenfalls von der Anordnung und Ausrichtung dieser verschiedenartigen Elementarzellen bestimmt.

Der Aufbau der Mesostruktur ist so ausgelegt, dass das Material in definierter Weise nachgibt und somit ein oder mehrere definierte Freiheitsgrade ermöglicht werden. Dazu ist die Mesostruktur so aufgebaut, dass Teile der Volumenstruktur oder die Materialorientierung zumindest partiell nicht der Kraftrichtung folgend sind. Dies führt zu Bewegung, beziehungsweise zum Nachgeben der Struktur. Damit lässt sich der Kraftfluss durch Auslegung der Mesostruktur aus einer Kombination mehrerer Elementarzellen optimiert leiten. Zudem sind derartige Mesostrukturen je nach Material besonders einfach, beispielsweise durch ein additives Verfahren wie 3D-Druck herstellbar.

Die genannte Aufgabe wird gelöst durch eine Rückstelleinheit für die Rückstellung von Rotations- und/oder Translationsauslenkbewegungen, aufweisend eine aus einer geordneten Anordnung von mindestens zwei Elementarzellen gebildete, geordnete Mesostruktur von Elementarzellen, wobei die wenigstens zwei Elementarzellen jeweils mindestens eine Pore aufweisen, durch die die Elementarzellen mittels Krafteinwirkung reversibel kompressier- und expandierbar sind, wobei eine Rückstellkraft der Rückstelleinheit zumindest teilweise durch Verformung der Mesostruktur erzeugbar ist.

Die Rückstelleinheit ist erfindungsgemäß in einem Stellelement anwendbar, welches im Sinne der Erfindung insbesondere Bedienhebel oder ein anderes Bedienelement sein kann, jedoch ist die Rückstelleinheit auch zur Anwendung mit sonstigen Kontaktflächen geeignet, die beispielsweise eine Force-Feedback-Funktion aufweisen sollen. Die Rückstelleinheit weist eine geordnete, nicht jedoch eine stochastische Mesostruktur auf. Diese Mesostruktur ist gebildet aus mindestens zwei Elementarzellen, welche je nach beabsichtigter Kraftwirkung ausgelegt, angeordnet und verbunden sind. Dabei zeichnet sich jede Elementarzelle zunächst dadurch aus, dass diese durch ihre Form zwei Punkte im Raum über einen nicht direkten Weg verbinden. So weist eine Elementarzelle stets eine Krümmung oder Kante auf. Weiter weist jede Elementarzelle im Sinne der Erfindung zumindest eine Pore auf. Eine Pore im Sinne der Erfindung ist dabei eine Ausnehmung, welche zumindest in einer Ebene umschlossen ist, sich also ein beliebiger Startpunkt auf dem Rahmen der Elementarzelle durch komplettes Ablaufen des Rahmens als Endpunkt wiederfinden lässt. So ist beispielsweise ein Ring oder ein sonstiger Rahmen mit einem Loch eine Elementarzelle mit einer Pore im Sinne der Erfindung. Auch ein wie eine Acht geformter Rahmen mit zwei Löchern ist eine Elementarzelle im Sinne der Erfindung, jedoch aufweisend zwei Poren. Demgegenüber ist beispielsweise eine Windung einer Feder keine Elementarzelle im Sinne der Erfindung, da diese zwar eine Ausnehmung aufweist, ein Ende der Windung als Startpunkt aber nicht durch Ablaufen der gesamten Windung wieder erreichen lässt. Zudem ist das Material, aus dem die Mesostruktur gebildet ist, ein flexibles Material. Aufgrund dieser Ausgestaltung und der materiellen Beschaffenheit der Elementarzellen sind diese bei Krafteinwirkung reversibel kompressier- und expandierbar. Die Krafteinwirkung, die zu der Kompression oder Expansion der Elementarzellen führt kann dabei punktuell oder flächig, eine Translations- oder Rotationskraft sein. Die Kraftrichtung ist nicht zwingend auf die oben genannte Ebene der Pore oder Elementarzelle beschränkt. Aufgrund der Krafteinwirkung auf die Rückstelleinheit wirkt eine Kraft auf die Mesostruktur und damit auf mindestens eine Elementarzelle, welche wie beschrieben verformt wird. Damit werden auch alle mit dieser verformten Elementarzelle verbundenen Elementarzellen mitverformt. Zudem wird dadurch die Mesostruktur im Ganzen verformt. Aufgrund der Reversibilität der Kompression und Expansion der Elementarzellen und durch deren linear-elastischen Werkstoffverhalten erzeugen diese die Rückstellkraft, welche die Mesostruktur in seine Ruheposition zurückstellt. Durch die spezifische Anordnung der Elementarzellen und durch Auslegung ihrer Freiheitsgrade wird eine definierte räumliche Federwirkung der Rückstelleinheit erzeugt.

In Weiterbildung der Erfindung ist vorgesehen, dass die Rückstelleinheit mindestens zwei Mesostrukturen, insbesondere gleichartige Mesostrukturen, aufweist, welche zueinander in Kraftwirkung parallelgeschaltet sind. Die Parallelschaltung der Mesostrukturen im Sinne der Erfindung ist als Anordnung dieser nebeneinander zu verstehen, sodass die Anordnung der Mesostrukturen senkrecht zu der Kraftwirkungsrichtung angeordnet ist. Sind die Mesostrukturen dabei gleichartig, gleichen sich diese also in ihrer Struktur, Form, Material und Anordnung, ist es für die Erfindung unerheblich, wenn einzelne Mesostrukturen ausfallen sollten, beispielsweise durch Ermüdung und Bruch des Materials, da die restlichen funktionsfähigen Mesostrukturen die Rückstellkraft weiterhin erzeugen können. Dieser Vorteil der mechanischen Redundanz verstärkt sich mit steigender Anzahl der angewandten Mesostrukturen. Ebenso ist es erfindungsgemäß, wenn die Rückstelleinheit mindestens zwei Mesostrukturen, insbesondere gleichartige Mesostrukturen, aufweist, welche zueinander in Kraftwirkung in Reihe geschaltet sind, also bei der die Anordnung der Mesostrukturen in Kraftwirkungsrichtung ausgerichtet ist. Im Gesamten wird die Rückstelleinheit so weniger belastet, wenn sich die Last von einer ausgefallenen Mesostruktur auf möglichst viele verbleibende funktionsfähige Mesostrukturen verteilt. Diese vorteilhafte Lastenverteilung kann im Übrigen auch innerhalb einer Mesostruktur auftreten, wenn diese besonders viele, in Reihe und/oder Parallel geschaltete Elementarzellen aufweist, beispielsweise in Form eines Gitters, in dem eine Elementarzelle ausfallen könnte, während die von dieser Elementarzelle ursprünglich übernommene Last auf die übrigen, unbeschädigten Elementarzellen verteilt wird. Zudem ist auch eine Parallelschaltung nicht gleichartiger Mesostrukturen denkbar. Dadurch kann eine spezifische Rückstellkraftverteilung über die Rückstelleinheit erreicht werden, beispielsweise in Form von Überdruckpunkten, welche durch die Anordnung von starren Mesostrukturen zwischen sonst weniger starren Mesostrukturen erzeugt werden.

In Ausgestaltung der Erfindung ist vorgesehen, dass mindestens einer Elementarzelle ein elastisches Element, insbesondere eine Feder oder ein Elastomer, oder ein adaptives Element, insbesondere ein Aktor oder ein MRF-Element, in Kraftwirkung vor- und/oder nachgeschaltet ist. Das Vor- oder Nachschalten im Sinne der Erfindung ist als Reihenschaltung zu verstehen, bei dem die Elementarzelle und das elastische oder adaptive Element zueinander parallel zur Kraftwirkungsrichtung angeordnet sind. Als elastisches Element wird dabei ein rein passives Element verstanden, welches bei Verformung eine eigene vordefinierte Rückstellkraft erzeugt, die die Rückstellkraft der vor- oder nachgeschalteten Elementarzelle überlagert. Als adaptives Element werden aktive Elemente verstanden, welche durch einen Benutzer bedienbar sind. So kann ein Benutzer durch Ansteuerung des adaptiven Elements die dadurch erzeugte Rückstellkraft oder die Vorspannung der vor- oder nachgeschalteten Elementarzelle bedarfsgerecht einstellen. Dabei ist ein MRF-Element ein Element aufweisend ein magnetorheologisches Fluid, dessen Viskosität durch ein Magnetfeld beeinflussbar ist. Durch diese Elemente lässt sich eine Vorspannung an bestimmten Stellen innerhalb einer Mesostruktur erzeugen. Dies ermöglicht weitere Optionen, die der Einstellung einer anwendungsgerechten Kraftlinie dienlich sind. Insbesondere adaptive Elemente ermöglichen bei Bedarf die Zuschaltung einer Vorspannung oder einer Enddämpfung. Somit ist auch die Anpassung der Kraftlinie der Rückstelleinheit zu einer bedarfsgerechten linearen oder nichtlinearen Kraftlinie möglich. Im Übrigen ist auch eine derartige Reihenschaltung von elastischen und/oder adaptiven Elementen mit mindestens einer Mesostruktur erfindungsgemäß vorgeschlagen, sodass die Vorspannung auch auf eine gesamte Mesostruktur auswirkend ist. Diese kann mit der Reihenschaltung von in der besagten Mesostruktur angeordneten Elementarzellen und elastischen und/oder adaptiven Elementen kombiniert werden, um eine besonders detaillierte Kraftlinienverteilung über die gesamte Rückstelleinheit hinweg definieren zu können.

In Weiterbildung der Erfindung ist vorgesehen, dass mindestens eine Mesostruktur mindestens zwei verschiedene Elementarzellen aufweist, die sich in ihrer Struktur, Form, Material und/oder Anordnung unterscheiden. Die Mesostruktur kann erfindungsgemäß auch Anteile einer stochastischen Mesostruktur ergänzt um Elementarzellen entsprechend einer geordneten Mesostruktur aufweisen. Durch die Wahl der Struktur und Form der Elementarzellen lässt sich die Kraftlinie der Rückstelleinheit beispielsweise je nach Kompressions- oder Zugkraft beeinflussen. Als unterschiedliche Materialien sind insbesondere solche Materialien erfindungsgemäß, die durch ein additives Fertigungsverfahren, beispielsweise durch 3D-Druck hergestellt werden können um eine besonders einfache Herstellung zu ermöglichen. Ebenfalls sind elektrisch leitende oder magnetische Materialien vorteilhaft, welche durch ein äußeres Magnet- oder elektrisches Feld in ihrer Steifigkeit beeinflussbar sind. So können einzelne Elementarzellen bei Anlegen eines Magnet- oder elektrischen Feld vorgespannt werden und so die Kraftlinie der Rückstelleinheit beeinflusst werden. Jedoch sind grundsätzlich jegliche reversibel flexible Materialien erfindungsgemäß. Die Anordnung der Elementarzellen kann sich insbesondere hinsichtlich deren Orientierung zueinander unterscheiden. Durch die Kombination solcher unterschiedlicher Elementarzellen können unterschiedliche Kraftreaktionen in unterschiedliche Raumrichtungen erzeugt werden. Diese unterschiedlichen Kraftreaktionen können lineare und nichtlineare Kräfte sein, welche sich zu anwendungsgerechten Kraftlinien kombinieren lassen. Zudem kann dadurch eine erhöhte Stabilität gegen die verschiedenen Kräfte in unterschiedlichen Raumrichtungen erzielt werden. Aufgrund der hohen Anzahl kombinierbarer Materialien, Strukturen, Formen und Anwendungen ergibt sich eine hohe Anzahl an möglichen Ausführungen der erfindungsgemäßen Rückstelleinheit und somit eine hohe Anwendungsvariabilität.

In Ausgestaltung der Erfindung ist vorgesehen, dass die Rückstelleinheit verschiedene Mesostrukturen aufweist, die in ihrer Benutzung austauschbar sind. Diese Austauschbarkeit ist insbesondere bei solchen Mesostrukturen vorteilhaft, welche sich in ihrer Struktur, Form, Material und/oder Anordnung unterscheiden. Das Auswechseln der Mesostrukturen ermöglicht den Wechsel zwischen unterschiedlichen vordefinierten Kraftlinien, die sich, wie oben bereits beschrieben, aus der jeweiligen Beschaffenheit der ausgewählten Mesostruktur ergeben. So lässt sich bedarfsgerecht eine bestimmte Mesostruktur aktivieren, deren Kraftlinie der aktuellen Anwendung entspricht. Insbesondere in Anwendungsfällen, in denen unterschiedliche Umgebungsfaktoren oder Verwendungsarten auftreten, kann eine einzelne Rückstelleinheit für verschiedenste Anforderungen optimal angepasst werden. Beispielhaft ist die Rückstelleinheit in einer Bedienvorrichtung einer Landmaschine wie einem Traktor anwendbar, an den verschiedenste Arbeitsmaschinen mit unterschiedlichen Funktionen angekoppelt werden. Diese werden üblicherweise über eine gleichbleibende zentrale Steuerung im Traktor gesteuert. Durch die erfindungsgemäße Rückstelleinheit lässt sich die Bedienvorrichtung jedoch zumindest in den Rückstellkraftlinien stets an die angeschlossene Arbeitsvorrichtung anpassen.

In Weiterbildung der Erfindung ist vorgesehen, dass die verschiedenen Mesostrukturen durch ein Wechselmagazin, insbesondere ein Trommelwechselmagazin in der Rückstelleinheit gegeneinander austauschbar sind. Dadurch werden die oben beschriebenen Vorteile der verschiedenen austauschbaren Mesostrukturen erreicht. Ein Wechselmagazin im Sinne der Erfindung ist eine Vorrichtung, in der mehrere verschiedene Mesostrukturen voneinander getrennt aufgenommen und abrufbar sind. Dies kann beispielsweise ein linear verschiebbar gelagertes Magazin sein, durch dessen verschieben verschiedene Mesostruktursegmente abrufbar sind. Besonders vorteilhaft ist jedoch ein Trommelwechselmagazin, welches eine besonders einfache Ausführungsform eines Wechselmagazins darstellt, bei dem die zu verwendende Mesostruktur in eine aktive Position gedreht wird, während die übrigen Mesostrukturen nicht mit einem rückzustellenden Element, beispielsweise einer Bedienvorrichtung, wirksam verbunden ist. Ein Trommelwechselmagazin lässt sich zudem besonders platzsparend konstruieren. Die Anwendung eines solchen Wechselmagazins ermöglicht eine modulare Gestaltung der Rückstelleinheit, bei der einzelne Mesostrukturen beispielsweise bei Wartungsarbeiten oder bei veränderten Anforderungen an die Rückstelleinheit ausgetauscht werden können. Entsprechend ist es besonders vorteilhaft, wenn die verschiedenen Mesostrukturen lösbar verbindbar in das Wechselmagazin einsetzbar sind.

In Ausgestaltung der Erfindung ist vorgesehen, dass mindestens eine Mesostruktur mindestens einen Signalgeber aufweist. Als Signalgeber wird ein in die Mesostruktur integriertes oder aufgebrachtes Element verstanden, welches ein außerhalb der Rückstelleinheit durch einen Signalempfänger wahrnehmbares Signal abgibt und so für die Positions- bzw. Parameterbestimmbarkeit, hinsichtlich Dehnung, Materialparameter oder ähnliche Parameter, der Struktur sorgt. Ein solcher Signalgeber kann beispielsweise ein einfacher Magnet sein, der durch Aussenden eines Magnetfeldes ein von außerhalb der Reaktionseinheit wahrnehmbares Signal abgibt. Ebenso ist ein passiver Signalgeber erfindungsgemäß, bei dem beispielsweise ein von außerhalb der Mesostruktur kommendes Licht je nach Verformung der Mesostruktur unterschiedlich gebrochen oder bedeckt wird und dieses beeinflusste Licht von außerhalb der Mesostruktur wahrnehmbar ist. So ist es ebenfalls erfindungsgemäß, Signalgeber zu verwenden, die einen Teil der Mesostruktur oder von einzelnen Elementarzellen bilden, also darin angeformt oder eingearbeitet sind. Zudem ist es erfindungsgemäß, dass die Rückstelleinheit zusätzlich oder ausschließlich eine Reaktionseinheit und/oder eine Auswerteeinheit aufweist. Die Reaktionseinheit ist als Element zu verstehen, das auf ein äußeres Einwirken, beispielsweise ein Magnet- oder ein elektrisches Feld, mit einer entsprechenden Änderung zumindest einer Eigenschaft wie der Position, Orientierung oder Steifigkeit reagiert. Dabei ist die Reaktionseinheit derart in oder an der Mesostruktur oder einer Elementarzelle angeordnet, dass die Änderung der Eigenschaft der Reaktionseinheit zu einer veränderten Kraftlinie der Rückstelleinheit führt. So kann die Reaktionseinheit wie auch der Signalgeber ein Bauteil der Mesostruktur oder Elementarzelle sein oder aber lediglich an diesen angeordnet sein. Auch ist sowohl eine passive Reaktionseinheit wie ein Magnet, als auch eine aktive Reaktionseinheit, die nur bei Bedarf zuschaltbar und/oder deren Reaktivität veränderbar ist, erfindungsgemäß vorgeschlagen. Eine aktive Reaktionseinheit ist beispielsweise ein Elektromagnet, der je nach angelegter Stromstärke sein Magnetfeld verändert, welches auf ein äußeres Magnetfeld reagiert. Die Auswerteeinheit im Sinne der Erfindung ist ein Element, dass die Änderung der zuvor genannten Parameter der Signalgeber empfangend ist. Eine Auswertung im Sinne einer Verwertung oder Interpretation der empfangenen Signale ist dabei nicht zwingend. So ist auch ein Erkennen einer Änderung an sich ausreichend. Alternativ oder ergänzend dazu ist die Auswerteeinheit erfindungsgemäß ein Element, welches die Reaktionseinheit ansteuernd ist und so die gewünschten Reaktionen dieser bedarfsgerecht hervorrufend ist.

Weiter wird erfindungsgemäß eine Bedienvorrichtung vorgeschlagen, aufweisend eine Rückstelleinheit wie oben beschrieben. Insbesondere solche Bedienvorrichtungen, welche üblicherweise eine Rückstelleinheit aufweisen, sind durch die Verwendung der oben beschriebenen, erfindungsgemäßen Rückstelleinheit bedarfsgerecht variabel einsetzbar. Dies ist insbesondere bei Joysticks und sonstigen Bedienhebeln, aber auch bei Bedientasten und Touchpads besonders vorteilhaft. Auch Bedienvorrichtungen, deren Bedienbewegung eine Rotationsbewegung ist, können die erfindungsgemäße Rückstelleinheit aufweisen. Dabei ist es besonders vorteilhaft, wenn die Bedienvorrichtung derart wirksam mit der Rückstelleinheit verbunden ist, dass durch die Bewegung der Bedienvorrichtung eine Kompression oder Expansion der Rückstelleinheit verursacht wird, sodass diese eine Rückstellkraft auf die Bedienvorrichtung auslöst. Zudem ist auch eine auf die in der Rückstelleinheit vorgesehenen Mesostrukturen wirkende Rotationskraft durch die Mesostrukturen bei entsprechenden Eigenschaften ausgleichbar.

In Ausgestaltung der erfindungsgemäßen Bedienvorrichtung ist vorgesehen, dass sie einen Bedienhebel aufweist, wobei die Rückstelleinheit in dem Bedienhebel gelagert ist, insbesondere in einem eine Kulisse abtastenden Element des Bedienhebels. Dabei kann durch die Ausgestaltung der Rückstelleinheit und die Form der Kulisse eine bedarfsgerechte Kraftlinie gebildet werden, durch die der Bedienhebel je nach Position oder Auslenkung unterschiedliches Feedback an einen Benutzer abgibt. Diese Kraftlinie ist dabei nicht nur durch die Wahl der Kulisse veränderbar. Vielmehr ist die Gestaltungsfreiheit aufgrund der möglichen hohen Komplexität der Mesostruktur besonders groß. Zudem ist die Rückstelleinheit aufgrund der Redundanz der Elementarzellen besonders wartungsarm.

In Weiterbildung der erfindungsgemäßen Bedienvorrichtung ist vorgesehen, dass sie eine Kulisse, in der ein Bedienhebel geführt ist, aufweist, wobei die Rückstelleinheit die Kulisse zurückstellend ist. Gegenüber der zuvor beschriebenen Ausführungsform der Erfindung, nach der die Rückstelleinheit in dem Bedienhebel gelagert ist, kann auch in dieser Ausführungsform die Kraftlinie der Rückstellkraft durch die Form der Kulisse oder durch die Ausgestaltung der Rückstelleinheit angepasst werden. Dabei wird die Kulisse je nach Form der Kulisse bei einer bestimmten Auslenkung des Bedienhebels von dem die Kulisse abtastenden Element des Bedienhebels verdrängt und die Rückstelleinheit entsprechend gespannt. Aufgrund der von der Rückstelleinheit erzeugten Rückstellkraft wird die Kulisse und somit auch der in der Kulisse geführte Bedienhebel in ihre Ausgangslage gedrängt. Eine besonders einfache Anordnung der Rückstellkraft ist eine Anordnung an der Kulisse auf der dem Bedienhebel gegenüberliegenden Seite der Kulisse. Zudem ist es besonders vorteilhaft, wenn die Kulisse flexibel ausgestaltet ist, also nicht nur im Ganzen vom Bedienhebel verdrängt und von der Rückstelleinheit zurückgestellt werden kann. Aufgrund der hohen Gestaltungsfreiheit der Rückstelleinheit ist es so möglich, einzelne Abschnitte der Kulisse mit unterschiedlichen Steifigkeiten der Rückstelleinheit zu versehen. Dieser Effekt kann nochmals mit Volumenkörpern auf der Kulisse verstärkt werden, insbesondere solchen, die eine zum Rest der Kulisse unterschiedliche Steifigkeit aufweist. So kann durch geeignete Wahl der Kulissenform und der Ausgestaltung der Rückstellkraft eine bedarfsgerechte Kraftlinie erzeugt und so ein Überdruckpunkt erstellt werden.

In Ausgestaltung der erfindungsgemäßen Bedienvorrichtung ist vorgesehen, dass die Kulisse mehrteilig ist, wobei zumindest eines dieser Kulissenteile durch eine Rückstelleinheit zurückgestellt wird. In einer solchen Ausführungsform muss der Bedienhebel selbst nicht durch eine Rückstelleinheit zurückgestellt werden. Vielmehr wird auch hier zumindest eines der Kulissenteile durch die Rückstelleinheit zurückgestellt. Dies kann in Form eines Kulissensystems verwirklicht sein, bei dem das mindestens eine Kulissenteil eine Kulisse für den in dieser geführten Bedienhebel bildet, wobei die Kulisse eine je nach Lage des Bedienhebels veränderte Rückstellkraft auf diesen ausübend ist. Ebenso ist es erfindungsgemäß, einzelne Abschnitte einer Kulisse, welche nur bei bestimmten Auslenkungen des darin geführten Bedienhebels von diesem kontaktiert sind, mit Rückstelleinheiten oder von den restlichen Kulissenteilen unterschiedlichen Rückstelleinheiten zu versehen, sodass je nach Bedienhebelauslenkung ein bedarfsgerechtes Rückstellverhalten der Rückstelleinheit erzielt werden kann. Dadurch lassen sich nochmals spezifischere Kraftlinien der Rückstelleinheit und ein besonders individuelles Kulissensystem, beispielsweise mit Überdruckpunkten, erzeugen.

In Weiterbildung der erfindungsgemäßen Bedienvorrichtung ist vorgesehen, dass sie eine von einem Benutzer kontaktierte Kontaktfläche aufweist, die durch die Rückstelleinheit zurückgestellt wird. Durch die Anwendung der erfindungsgemäßen Rückstelleinheit in solchen Kontaktflächen lässt sich vorteilhaft die Haptik der Kontaktfläche je nach Eigenschaften der Rückstelleinheit und den darin verwendeten Mesostrukturen definieren. Diese anpassbare Haptik ermöglicht eine variable Anpassung der Kontaktfläche an einen diese kontaktierenden Benutzer. Zudem kann die Haptik durch eine Segmentierung der Rückstelleinheit örtlich begrenzt sein und besonders präzise an den Benutzer angepasst oder diesem Informationen zur Kontaktfläche liefern. Ist die Kontaktfläche eine Auflagefläche, beispielsweise eine Armauflagefläche eines Armrests, kann diese in ihrer gesamten Fläche mit der Rückstelleinheit ausgestattet sein. In diesem Fall gibt die Auflagefläche je nach Beanspruchung und Beanspruchungsposition ergonomisch entsprechend dem Kontakt des Benutzers nach. Die Steifigkeit kann auch hier durch Struktur, Form, Material und Anordnung der Mesostrukturen und Elementarzellen der Rückstelleinheit definiert werden. Auch eine räumlich variable Steifigkeit ist durch die erfindungsgemäße Rückstelleinheit definierbar. Demgegenüber wäre eine variable Steifigkeit bei der Verwendung herkömmlicher Polster nur durch einen hohen konstruktiven Aufwand erreichbar. Bei einer Kontaktfläche in Form einer Bedienfläche, beispielsweise einem Touchpad, lässt sich ebenfalls die Haptik der Kontaktfläche durch bedarfsgerechte und geeignete Wahl der Struktur, Form, Material und Anordnung der Mesostrukturen und Elementarzellen der Rückstelleinheit die Steifigkeit der Kontaktfläche definieren. Ebenso wird ein Griff eines Bedienhebels, also der einem Benutzer und von diesem in Benutzung kontaktierte Teil, als Kontaktfläche erfindungsgemäß vorgeschlagen, bei dem die Verwendung der Rückstelleinheit die gleichen, bereits genannten Vorteile bietet. Dadurch erfährt der Benutzer sowohl ein bestimmtes haptisches, als auch ein visuelles Feedback durch die Formänderung der Kontaktfläche. Aufgrund der Ausgestaltung der Elementarzellen und der daraus gebildeten Mesostruktur lässt sich auch durch die Struktur ein dahinter dargestelltes Licht eines Displays erkennen. So kann das Licht dahinter durch die Struktur durchscheinen oder aber durch Lichtleiter, die in die Struktur der Rückstelleinheit eingearbeitet sind geleitet und so einem Benutzer vor der Rückstelleinheit dargestellt werden.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: Eine beispielhafte Mesostruktur im Sinne der Erfindung,
- Fig. 2a:: eine erste Alternative einer erfindungsgemäßen Rückstelleinheit in Anwendung mit einer Bedienvorrichtung in einem Ruhezustand,
- Fig. 2b:: eine erste Alternative einer erfindungsgemäßen Rückstelleinheit in Anwendung mit einer Bedienvorrichtung in einem ausgelenkten Zustand,
- Fig. 3:: eine zweite Alternative einer erfindungsgemäßen Rückstelleinheit in Anwendung mit einer Bedienvorrichtung in einem Ruhezustand,
- Fig. 4a:: eine dritte Alternative einer erfindungsgemäßen Rückstelleinheit in Anwendung mit einer Bedienvorrichtung in einem Ruhezustand,
- Fig. 4b:: eine vierte Alternative einer erfindungsgemäßen Rückstelleinheit in Anwendung mit einer Bedienvorrichtung in einem Ruhezustand,
- Fig. 5a:: eine erste Alternative einer erfindungsgemäßen Rückstelleinheit in Anwendung mit einer flexiblen Kulisse,
- Fig. 5b:: eine zweite Alternative einer erfindungsgemäßen Rückstelleinheit in Anwendung mit einer flexiblen Kulisse,
- Fig. 5c:: eine dritte Alternative einer erfindungsgemäßen Rückstelleinheit in Anwendung mit einer flexiblen Kulisse,
- Fig. 6:: ein erfindungsgemäßes Wechselmagazin mit verschiedenen Mesostrukturen,
- Fig. 7:: eine erfindungsgemäße Rückstelleinheit in Anwendung in dem Griff eines Bedienhebels.

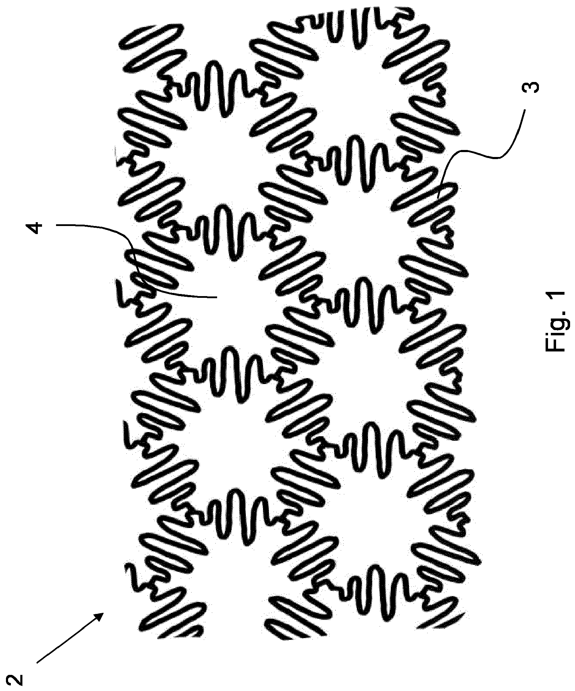

**Fig. 1** zeigt eine beispielhafte Mesostruktur 2 im Sinne der Erfindung. Die dargestellte Mesostruktur 2 ist eine geordnete, also nicht stochastische Mesostruktur 2, die mehrere Elementarzellen 3 aufweist. Die Elementarzellen 3 sind in dem dargestellten Ausführungsbeispiel gebildet aus mehreren wellenförmigen Wänden, die derart zueinander angeordnet sind, dass sie in einer Ebene in etwa ein Sechseck bilden, in dessen Mitte eine Ausnehmung als Pore 4 angeordnet ist. Dabei ist das Bilden eines Sechsecks in einer Ebene derart zu verstehen, dass ein Punkt auf der Wandung der Elementarzelle 3 durch ablaufen der Elementarzelle 3 erneut erreichbar ist. Die Pore 4 ist damit eine Ausnehmung, die zumindest auf der Ebene, auf der die Elementarzelle 3 im Wesentlichen ein Sechseck bildet, von der Elementarzelle 3 umschlossen ist. Aufgrund der Formgebung der Elementarzellen 3 und deren flexibles Material sind die Elementarzellen 3 bei Krafteinwirkung reversibel kompressier- und expandierbar. Die gesamte Mesostruktur 2 ist damit sowohl lokal über einzelne Elementarzellen 3 als auch insgesamt über alle Elementarzellen 3 gemeinsam reversibel kompressier- und expandierbar. Dies ermöglicht eine präzise, bedarfsgerechte Anwendung der Mesostruktur 2, aber auch eine hohe gestalterische Variabilität dieser Mesostruktur 2, welche durch die geeignete Wahl von Elementarzellen 3 und deren Struktur, Anordnung, Form und/oder Material und durch deren Anordnung zueinander im Einzelnen oder im Gesamten je nach Anwendungsfall anpassbar ist. Aufgrund der Redundanz der Elementarzellen 3 kann der Ausfall einzelner Elementarzellen 3 durch die Umverteilung der Kräfte auf die übrigen Elementarzellen 3 kompensiert werden. Dadurch ist die Funktion der Rückstelleinheit 1 auch bei Ausfall einzelner Elementarzellen 3 weiterhin in vollem Umfang gegeben.

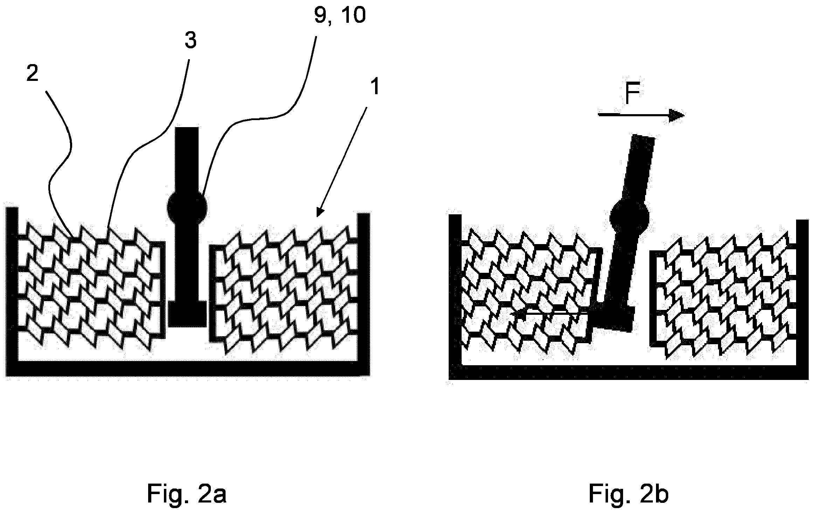

**Fig. 2a** zeigt eine erste Alternative einer erfindungsgemäßen Rückstelleinheit 1 in Anwendung mit einer Bedienvorrichtung 9 in einem Ruhezustand. Die Rückstelleinheit 1 ist gebildet aus einer Mesostruktur 2 aufweisend mehrere Elementarzellen 3. Die dargestellte Ausgestaltung der Mesostruktur 2 ist exemplarisch für eines von vielen möglichen Ausgestaltung der Mesostruktur 2 zu verstehen, welche wie bereits zu **Fig. 1** ausgeführt verschiedenste Formen annehmen kann. Die Bedienvorrichtung 9 ist in der dargestellten Ausführungsform ein Bedienhebel 10, jedoch sind jegliche andere dreh- oder schwenkbaren Bedienvorrichtungen 9 mit der dargestellten Ausführungsform der Rückstelleinheit anwendbar. In der in **Fig. 2a** dargestellten Ausführungsform ist die Rückstelleinheit 1 in Schwenkrichtung zum dem Benutzer abgewandten Ende der Bedienvorrichtung 9 angeordnet. Damit wirkt die Rückstellkraft der Rückstelleinheit 1 bei Auslenkung der Bedienvorrichtung 9 und, wie durch die in **Fig. 2b** eingezeichnete Kraftrichtungen dargestellt, damit einhergehender Stauchung der Rückstelleinheit 1 ohne weitere Kraftumleitung entgegen der Schwenkrichtung der Bedienvorrichtung 9. **Fig. 2b** zeigt die gleiche erfindungsgemäße Rückstelleinheit 1 in Anwendung mit einer Bedienvorrichtung 9 in einem ausgelenkten Zustand. Bei der Auslenkung wird ein in der Rückstelleinheit 1 geführtes Ende der Bedienvorrichtung 9 verschwenkt und drückt gegen die Rückstelleinheit 1 derart, dass diese komprimiert wird. Dadurch wird in der Mesostruktur 2 eine Rückstellkraft erzeugt, die die Rückstelleinheit 1 in ihren Ruhezustand zurückstellt und so gegen die Bedienvorrichtung 9 und deren Auslenkung wirkt.

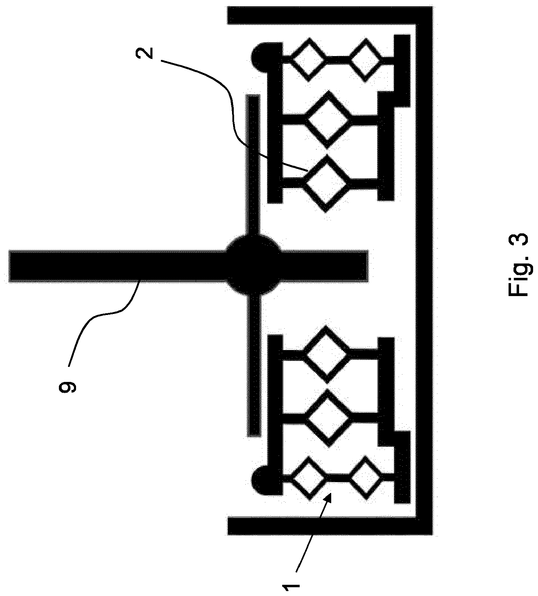

**Fig. 3** zeigt eine zweite Alternative einer erfindungsgemäßen Rückstelleinheit 1 in Anwendung mit einer Bedienvorrichtung 9 in einem Ruhezustand. Die Rückstelleinheit 1 ist in Anwendung mit einer Bedienvorrichtung 9 dargestellt, wobei die Bedienvorrichtung 9 einen Arm oder eine Ebene senkrecht zur Längsachse der Bedienvorrichtung 9 aufweist, der bei Auslenkung der Bedienvorrichtung 9 mit der Rückstelleinheit 1 in Kontakt tritt und diese komprimiert. Durch die in der Rückstelleinheit 1 erzeugte Rückstellkraft wird die Bedienvorrichtung 9 in ihre Ruheposition zurückgestellt. Die Rückstelleinheit 1 weist mehrere, zueinander parallel geschaltete Mesostrukturen 2 auf, welche hier als schematische Vierecke dargestellt sind. Diese schematische Darstellung umfassen jegliche Formen von Mesostrukturen 2, welche erfindungsgemäß jeweils zumindest zwei Elementarzellen mit jeweils mindestens einer Pore aufweisen. Die Parallelschaltung der Mesostrukturen 2 ist als Anordnung dieser nebeneinander zu verstehen, sodass die Anordnung der Mesostrukturen 2 senkrecht zu der Kraftwirkungsrichtung angeordnet ist. Durch diese Redundanz der parallel geschalteten Mesostrukturen 2 kann der Ausfall einzelner Mesostrukturen 2 durch Umverteilung der Kräfte auf die übrigen Mesostrukturen 2 kompensiert werden. Dadurch ist die Funktion der Rückstelleinheit 1 auch bei Ausfall einzelner Mesostrukturen 2 weiterhin in vollem Umfang gegeben. Durch die Reihenschaltung von Mesostrukturen 2 an ausgewählten Stellen, also die Anordnung der Mesostrukturen 2 in Kraftwirkungsrichtung zueinander, können an diesen Stellen zu den übrigen Mesostrukturen 2 unterschiedliche Kraftlinien erzeugt werden, beispielsweise um Überdruckpunkte zu bilden. Durch eine geeignete Wahl von Reihen- und Parallelschaltungen der Mesostrukturen in spezifischen Positionen lässt sich so eine spezifische, bedarfsgerechte Kraftlinie der Rückstelleinheit 1 erzielen.

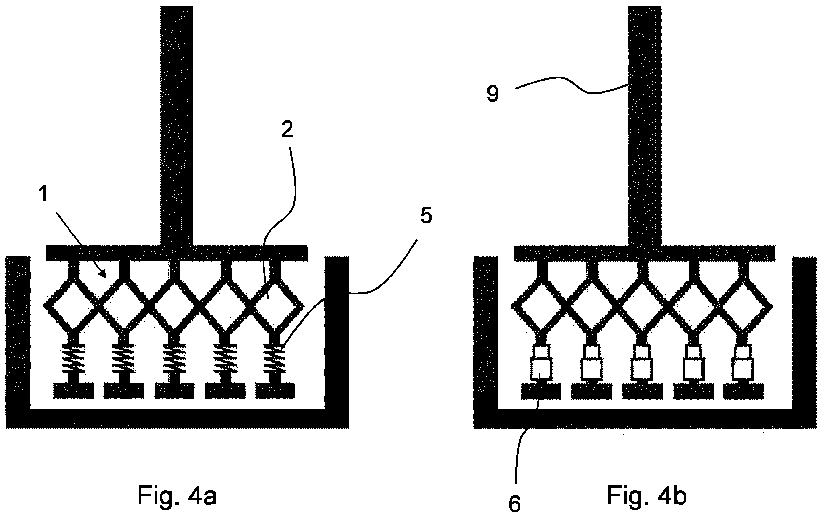

**Fig. 4a** zeigt eine dritte Alternative einer erfindungsgemäßen Rückstelleinheit 1 in Anwendung mit einer Bedienvorrichtung 9 in einem Ruhezustand. Die Bedienvorrichtung 9 überträgt in dieser Ausführungsform sowohl Schwenkbewegungen als auch Zug- und Druckbewegungen auf die Rückstelleinheit 1, wodurch die Rückstelleinheit und die darin enthaltenen flexiblen Elemente entsprechend komprimiert und expandiert werden. Die Rückstelleinheit 1 weist in dieser Ausführungsform eine Vielzahl von zueinander parallel geschalteten Mesostrukturen 2 auf, welche die bereits genannten Vorteile bieten. Dabei sind in der dargestellten Ausführungsform die Mesostrukturen 2 und elastische Elemente 5 in Form von Federn zueinander in Reihe geschaltet, also zueinander parallel zur Kraftwirkungsrichtung angeordnet. Die Feder ist eine einfache Variante eines elastischen Elements 5 im Sinne der Erfindung, welches ein passives Element ist, das bei Verformung eine vordefinierte Rückstellkraft erzeugt, die die Rückstellkraft der vor- oder nachgeschalteten Mesostruktur 2 überlagert. Demgegenüber zeigt **Fig. 4b** eine vierte Alternative einer erfindungsgemäßen Rückstelleinheit 1 in Anwendung mit einer identischen Bedienvorrichtung 9 in einem Ruhezustand, wobei den Mesostrukturen 2 in dieser Ausführungsform mit adaptiven Elementen 6, hier in Form von Aktuatoren, in Reihe geschaltet sind. Diese sind gegenüber den elastischen Elementen aus **Fig. 4a** aktive Elemente, welche durch einen Benutzer bedienbar sind. Ein Benutzer kann demnach durch Ansteuerung des adaptiven Elements 6 die dadurch erzeugte Rückstellkraft oder die Vorspannung der nachgeschalteten Mesostruktur 2 bedarfsgerecht einstellen. Sowohl durch die elastischen, als auch durch die adaptiven Elemente wird an den nachgeschalteten Mesostrukturen 2 eine Vorspannung erzeugt. Dadurch ist die aufgrund der Variabilität der Mesostruktur 2 ohnehin variabel gestaltbare Rückstelleinheit 1 nochmals flexibler einsetzbar und eine Kraftlinie besonders präzise bestimmbar.

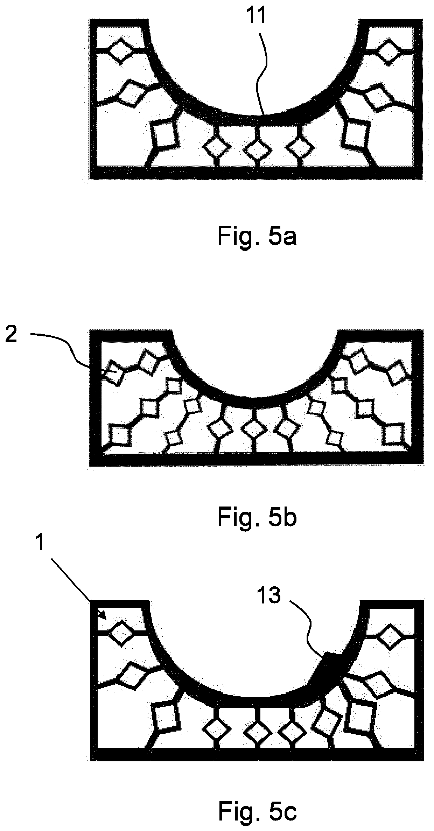

**Fig. 5a** zeigt eine erste Alternative einer erfindungsgemäßen Rückstelleinheit 1 in Anwendung mit einer flexiblen Kulisse 11. Im Anwendungsfall wird eine Bedienvorrichtung, die an einem Ende in der Kulisse 11 beweglich, insbesondere schwenkbar geführt ist und die Kulisse 11 bei einer Auslenkung der Bedienvorrichtung entsprechend verformt und oder verdrängt. Die dargestellte Kulisse 11 kann demnach in ihrer Grundform veränderlich sein, was einer Verformung gleichkommt, oder aber nur in ihrer Gesamtheit beweglich gelagert sein, sodass bei einer Verdrängung die gesamte Kulisse 11 relativ zu einem Grund bewegt wird. Die Kulisse 11 wird dabei durch die damit wirksam verbundene Rückstelleinheit 1 in ihre Ruheposition zurückgestellt. Die Rückstelleinheit 1 weist auch hier mehrere parallelgeschaltete Mesostrukturen 2 auf, die jeweils einzelne Bereiche der Kulisse 11 und die Kulisse 11 aufgrund ihrer Orientierung in verschiedene Kraftrichtungen zurückstellend sind. **Fig. 5b** zeigt dagegen eine zweite Alternative einer erfindungsgemäßen Rückstelleinheit 1 in Anwendung mit einer flexiblen Kulisse 11, bei der an ausgewählten Stellen Mesostrukturen 2 zueinander in Reihe geschaltet sind. Dadurch ergeben sich andere Kraftlinien, durch die die Rückstellkraft je nach Position der Bedienvorrichtung in der Kulisse 11 unabhängig von der eigentlichen Kulissenform unterschiedlich angepasst ist. Dadurch können beispielsweise Überdruckpunkte oder andere bedarfsgerechte spezifische Kraftlinien oder -punkte erzeugt werden. Dazu gegenteilig zeigt **Fig. 5c** eine dritte Alternative einer erfindungsgemäßen Rückstelleinheit 1 in Anwendung mit einer flexiblen Kulisse 11, bei der ein solcher Überdruckpunkt durch die Kombination der federnden Mesostrukturen 2 und vor allem einem Volumenkörper auf der Kulisse 11, welcher eine von der Kulisse 11 unterschiedliche Steifigkeit aufweisen kann, erzeugt wird. Dabei lässt sich auch hier durch die Steifigkeit des Volumenkörpers und der Eigenschaften und Anordnung der Mesostrukturen 2 im Bereich des Überdruckpunkts eine bedarfsgerechte Kraftlinie erzeugen.

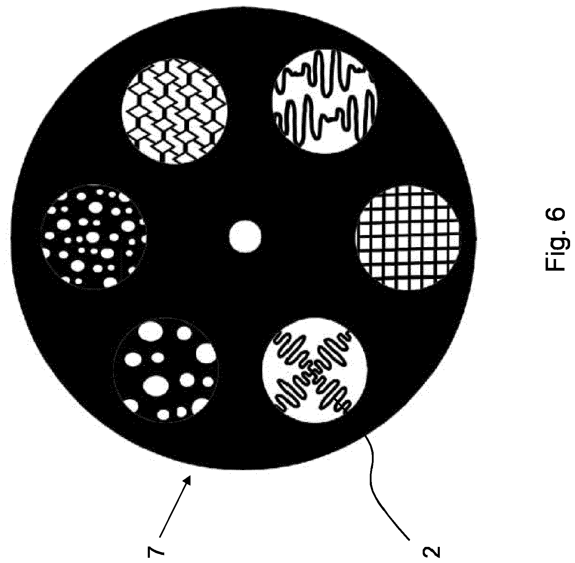

**Fig. 6** zeigt ein erfindungsgemäßes Wechselmagazin 7 mit verschiedenen Mesostrukturen 2. Das Wechselmagazin 7 ist dabei lediglich schematisch dargestellt und soll die grundlegende Funktionsweise veranschaulichen. Demnach weist das Wechselmagazin 7 mehrere Kammern auf, in denen verschiedene Mesostrukturen 2, welche hier ebenfalls lediglich schematisch dargestellt sind, insbesondere lösbar eingefügt sind. Das Wechselmagazin 7 ist derart zu einer Bedienvorrichtung angeordnet, dass diese mit einer der Kammern des Wechselmagazins 7 kraftwirksam verbunden ist, eine Bewegung der Bedienvorrichtung also in einer Kompression oder Expansion der in der besagten Kammer angeordneten Mesostruktur 2 resultiert. Ist ein solches als Trommelwechselmagazin ausgestaltetes Wechselmagazin 7 drehbar gelagert, kann durch dessen Drehung jede der darin angeordneten Mesostrukturen 2 in eine mit der Bedienvorrichtung kraftwirksam verbundene Position gebracht werden. Je nach Wahl der Mesostrukturen 2 können je nach Bedarf höchst spezifische Kraftlinien vorbereitet werden, die spezifischen Anwendungsfällen der Rückstelleinheit oder der zurückzustellenden Bedienvorrichtung entsprechen. Die Kammern sind nicht auf eine homogene Verteilung von Mesostrukturen 2 oder Elementarzellen beschränkt. Vielmehr können einzelne Kammern des Wechselmagazins 7 mehrere Kammern von Mesostrukturen aufweisen, wovon je nach Auslenkung einer zurückzustellenden Bedienvorrichtung nur einzelne Kammern komprimiert oder expandiert werden, wie beispielsweise in **Fig. 2a, 2b** **und** **3** dargestellt. Auch eine Variation der Mesostrukturen derart, dass spezifische Kraftlinien entstehen, wie in **Fig. 3****,** **4a****,** **4b** **und** **5b** dargestellt, ist erfindungsgemäß vorgesehen.

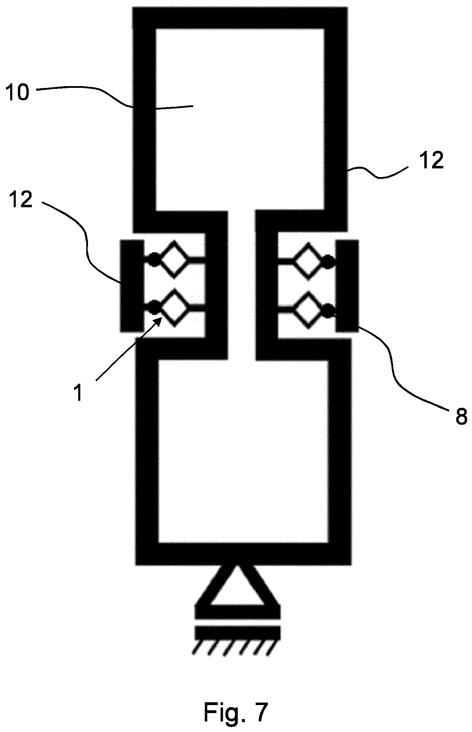

**Fig. 7** zeigt eine erfindungsgemäße Rückstelleinheit 1 in Anwendung in dem Griff eines Bedienhebels 10. Der Griff eines Bedienhebels 10 ist das Ende des Bedienhebels 10, das in Benutzung von einem Benutzer kontaktiert wird. Die Oberfläche des Griffs ist demnach eine Kontaktfläche 12 für den Benutzer. Die Rückstelleinheit 1 ist dabei derart in dem Griff angeordnet, dass der Benutzer die Rückstelleinheit 1 bei Benutzung des Griffs durch den Kontakt komprimierend ist. Der Benutzer nimmt die Rückstellkraft demnach je nach Intensität der Kompression wahr. Zudem weist die Rückstelleinheit 1 Signalgeber 8 auf, die ein Signal abgeben, welches von außen wahrnehmbar ist. So können die Signalgeber 8 beispielsweise einfache Magneten sein, die ein Magnetfeld abgeben, die durch einen Hallsensor oder anderen Elementen wahrnehmbar sind. Dadurch ist eine Positionsänderung der Signalgeber 8 bei Kompression oder Expansion der Rückstelleinheit 1 wahrnehm- und auswertbar.

### BEZUGSZEICHENLISTE

- 1: Rückstelleinheit
- 2: Mesostruktur
- 3: Elementarzelle
- 4: Pore
- 5: Elastisches Element
- 6: Adaptives Element
- 7: Wechselmagazin
- 8: Signalgeber
- 9: Bedienvorrichtung
- 10: Bedienhebel
- 11: Kulisse
- 12: Kontaktfläche
- 13: Volumenkörper

## Patentansprüche

1. Rückstelleinheit (1) für die Rückstellung von Rotations- und/oder Translationsauslenkbewegungen, aufweisend mindestens eine aus einer geordneten Anordnung von mindestens zwei Elementarzellen (3) gebildete, geordnete Mesostruktur (2), wobei die Elementarzellen (3) jeweils mindestens eine Pore (4) aufweiset, durch die die Elementarzellen (3) mittels Krafteinwirkung reversibel kompressier- und expandierbar sind, wobei eine Rückstellkraft der Rückstelleinheit (1) zumindest teilweise durch Verformung der Mesostruktur (2) erzeugbar ist.

2. Rückstelleinheit (1) gemäß Anspruch 1, **dadurch gekennzeichnet, dass** sie mindestens zwei Mesostrukturen (2), insbesondere gleichartige Mesostrukturen (2), aufweist, welche zueinander in Kraftwirkung parallelgeschaltet sind.

3. Rückstelleinheit (1) gemäß einem der Ansprüche 1 oder 2, **dadurch gekennzeichnet, dass** mindestens einer Elementarzelle (3) ein elastisches Element (5), insbesondere eine Feder oder ein Elastomer, oder ein adaptives Element (6), insbesondere ein Aktor oder ein MRF-Element, in Kraftwirkung vor- und/oder nachgeschaltet ist.

4. Rückstelleinheit (1) gemäß einem der Ansprüche 1, 2 oder 3, **dadurch gekennzeichnet, dass** mindestens eine Mesostruktur (2) mindestens zwei verschiedene Elementarzellen (3) aufweist, die sich in ihrer Struktur, Form, Material und/oder Anordnung unterscheiden.

5. Rückstelleinheit (1) gemäß einem der vorangegangenen Ansprüche, **dadurch gekennzeichnet, dass** sie verschiedene Mesostrukturen (2) aufweist, die in ihrer Benutzung austauschbar sind.

6. Rückstelleinheit (1) gemäß einem der vorangegangenen Ansprüche, **dadurch gekennzeichnet, dass** die verschiedenen Mesostrukturen (2) durch ein Wechselmagazin (7), insbesondere ein Trommelwechselmagazin in der Rückstelleinheit (1) gegeneinander austauschbar sind.

7. Rückstelleinheit (1) gemäß einem der vorangegangenen Ansprüche, **dadurch gekennzeichnet, dass** mindestens eine Mesostruktur (2) mindestens einen Signalgeber (8) aufweist.

8. Bedienvorrichtung (9) aufweisend eine Rückstelleinheit (1) gemäß einem der vorherigen Ansprüche.

9. Bedienvorrichtung (9) gemäß Anspruch 8, **dadurch gekennzeichnet, dass** sie einen Bedienhebel (10) aufweist, wobei die Rückstelleinheit (1) in dem Bedienhebel (10) gelagert ist, insbesondere in einem eine Kulisse (11) abtastenden Element des Bedienhebels (10).

10. Bedienvorrichtung (9) gemäß einem der Ansprüche 8 oder 9, **dadurch gekennzeichnet, dass** sie eine Kulisse (11), in der ein Bedienhebel (10) geführt ist aufweist, wobei die Rückstelleinheit (1) die Kulisse (11) zurückstellend ist.

11. Bedienvorrichtung (9) gemäß einem der Ansprüche 8, 9 oder 10, **dadurch gekennzeichnet, dass** die Kulisse (11) mehrteilig ist, wobei zumindest eines dieser Kulissenteile durch eine Rückstelleinheit (1) zurückgestellt wird.

12. Bedienvorrichtung (9) gemäß einem der Ansprüche 8 bis 11, **dadurch gekennzeichnet, dass** sie eine von einem Benutzer kontaktierte Kontaktfläche (12) aufweist, die durch die Rückstelleinheit (1) zurückgestellt wird.
